# EUROPEAN PATENT APPLICATION

(11) **EP 3 115 954 A1**
(43) Date of publication of application: **11.01.2017**
(21) Application number: 15002016.2
(22) Date of filing: 06.07.2015
(51) Int. Cl.: G06Q 30/02

(54) **METHOD FOR MANAGING AND TRANSMITTING INFORMATION OF INTEREST FOR A USER, AND SYSTEM THAT IMPLEMENTS SUCH METHOD**

(71) Applicant: Peoplelink s.r.l., 20153 Milano (IT)
(72) Inventor: Peoplelink s.r.l., 20153 Milano (IT)

(57) **Abstract**

Method for managing and transmitting information wherein is provided a user equipped with a user equipment, a management server provided to an employer, a an information database provided to said employer, the method comprising the steps of: A - collecting a plurality of interest information, in particular advertising information; B - by said server generating one or more voucher related to said interest information; C - by said server associating one or more voucher to said interest information; D - by said server, take a census of said user; E - through said user equipment, transmitting presence information of said user in a workplace to said server; F - by said server, extracting from said database at least one interest information to transmit to said user equipment on the basis of presence information received at the step E; G - by said user equipment, confirming the at least one interest information received at the step F; H - by said server, on the basis of the step G transmitting to said user equipment the voucher associated to the interest information.

## Description

### TECHNICAL FIELD

The present invention refers to a method for managing and transmitting information in the context of a service for acquiring working presences, as well as a system conceived to implement such method.

### STATE OF THE ART

The most of the workers give evidence to the employer of their employment work time clocking in at the entrance in service and clocking out at the end of the service. To do this operation, they swipe their badge in a dedicated device.

This approach has many drawbacks: the work must physically belong a badge of modest dimensions, easy to lose.

For workers outside their reference office (consultants, or the like), with this approach is not possible to demonstrate their presence in their actual site work. For the employer is not easy conveying service messages or other information in a unified platform comprising also presence management. To solve these problems, some operators have developed remote clocking in/out solutions through SMS; the worker with his mobile phone sends an predefined SMS to a dedicated number gathering the clocking in and clocking out. This approach, even if facilitate out of site workers, has some drawbacks: the service only keeps trace, of the presences of the worker, nevertheless does not offer any other service or utility. Furthermore, current presence management systems are not able to offer useful information for the employee and cannot optimize attention for these information.

### SUMMARY

The applicant has realized that known solutions provide few management flexibility for employer and few utility or interest services for the employees.

The object of the present invention is providing a method for managing interest information linked to the detection of presences allowing to solve in a simple and economic way drawbacks of the state of the art.

The first specific object of the present invention is providing a method to supply information deemed of interest for a worker on the basis of his demographic profile as well as his corporate profile.

The inventive idea on which the present invention is based on a synergic use of a smartphone supplied to a worker, a server supplied to an employer and a database supplied to the same employer configured to ensure an effective transmission and management of information deemed interesting for an employer. In general, the present invention concerns a method for managing and transmitting information wherein is provided a user equipped with a user equipment, a management server provided to an employer, a an information database provided to said employer, the method comprising the steps of:
A - collecting a plurality of interest information, in particular advertising information;
B - by said server generating one or more voucher related to said interest information;
C - by said server associating one or more voucher to said interest information;
D - by said server, take a census of said user;
E - through said user equipment, transmitting presence information of said user in a workplace to said server;
F - by said server, extracting from said database at least one interest information to transmit to said user equipment on the basis of presence information received at the step E;
G - by said user equipment, confirming the at least one interest information received at the step F;
H - by said server, on the basis of the step G transmitting to said user equipment the voucher assoclated to the interest information.

According to the present invention, the term "employer" designs the employer or any other entity which through the employer is in relation with his employees.

A further aspect of the present invention concerns a system for the management and transmission of information comprising:
- a plurality of user equipments configured to implement the steps of the method previously described;
- a management server configured to implement the steps of the method previously described;
- at least a database configured to implement the steps of the method previously described;

Further advantageous technical features are described in the dependent claims.

### LIST OF DRAWINGS

The technical features of the present invention, as well as his advantages, will be clear from the following description given for exemplary title, and not limitative, to be considered together with annexed drawings wherein:
- figure 1 shows a block diagram of operations intended to execute a method according the present invention;
- figure 2 shows a system configured to implement the method according the present invention.

### DETAILED DESCRIPTION

The description and the drawings are to be considered only for illustrative purposes, are therefore not limitative; therefore the present invention may be implemented according to different embodiments; further it is to be noted that the drawings are schematic and simplified.

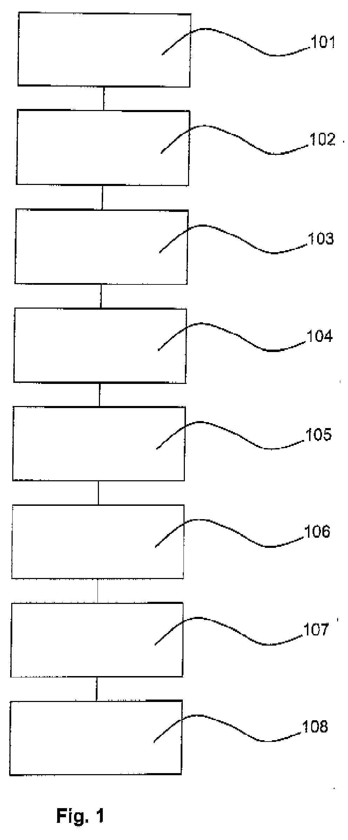

Figure 1 shows a block diagram of operations carried out according the method of the present invention.

According to the present invention, it is intended to enable an employer to provide interest information and a voucher corresponding to a credit to obtain and/or enjoy of a good for his employee (worker) or collaborator, on the basis of actions that the worker/collaborator performs daily and typically many times per day: time attendances ("clocking in/clocking out"). In other words, it is intended to transmit to a worker advertising information on the basis of its demographic and corporate profile and a voucher associated to good or service advertised in the information transmitted.

Therefore, according to the present invention is provided a user equipped of a user equipment (in the following also referred as *smartphone*), a management server provided to an employer, an information database provided to said employer. It is noted that in the meaning of the present invention, the term *Database* designs a database system, therefore a server connected to a plurality of hard disks configured to manage data reading/writing on these disks.

As shown in the block 101, the first step comprises collecting a plurality of interest information, in particular advertising information. The interest information may be represented according to a variety of formats: in a first embodiment through text, in an alternative embodiment, through a picture, in another embodiment through text and picture. Said pictures may be also in movement.

In one embodiment of this step, the subject employer evaluates a plurality of providers of products and/or services and selects a cluster deemed interesting for his employers.

With each of these providers the employer gains advantageous buying conditions, available for his employers through a system configured to implement the present method.

Information collected at the previous step populate the database. In one embodiment, a plurality of records are generated, each of them representing advertising information, and stored in the database.

In one embodiment, a record may simply report the name of the provider selected by the employer and the product offered by the provider, e.g. "Rossi Shoes - Shoes for men - London" or alternatively a picture representative of the logo of the provider itself.

After, the step 102 is reached wherein the voucher of the interest information are generated, said voucher relating to interest information populating the database and previously collected. In practice, vouchers are the discount or the offer for the product or the service object of the interest information, In one embodiment such voucher is represented as an alphanumeric string which, associated to a particular computer function, applies the discount to the good or to the service object of interest information during the purchasing phase.

After, the step 103 is reached, in which the voucher previously generated are associated with the interest information populating the database. In other words, the product object of the interest information (in the previous example, men shoes) is associated to the discount in the voucher (e.g. a 10% discount on men shoes sold by that provider).

After, the block 104 is reached wherein by the server provided to the employer, the user, namely the employer, gets a census. This step is typically carried out a first time when the method according the present invention is implemented (namely when a company decides to equip with a system configured according the method of the present invention), and all the times that a user is added, e.g. when an employee is hired by an employer equipped with a system described above.

The user census typically comprises gathering and storing his personal details and other relevant information, as described in the following.

Then the step 105 is reached where a user, through his smartphone, transmits presence information in his working site to the server of the employer. In other words, in this step the clocking in of the badge is sent to the employer. With the term working site of the user is intended that the employee may send confirmation of his presence both from a usual work site (e.g. the main site of the employer), and from an unusual, as the mission site. In one embodiment, the *smartphone* of the user comprises dedicated software (an app) running to affect the remote transmission of the presence to the server of the employee.

According to the present invention, the step 106 is reached. In this step, by the server of the employer, from the database it is retrieved at least one interest information to transmit to said user equipment, on the basis of presence information previously received. In other words, on the basis of the profile of its presences (e.g. employee often out of site) the more suitable information is sent. E.g. a male user, 35 years old, often out of site; the interest information, particularly advertising information transmitted may refer to advertising information of restaurants.

In one embodiment, presence information comprise geo-lorolization information received by the localization module (the GPS) of the smartphone of the user. In this way the profiling of the presence information is even more accurate, consequently interest information sent to the user are even more specific, focused on the site where he spends the most part of his time. For example, according to the previous example, for the male user 35 years old emerges from the presence information that he is often for business trip in London in Chelsea district. Interest information will be focused on advertising information of restaurants of that particular district.

In accordance with the method according to the present invention, it then proceeds to step 106 where at the server of the employer, is extracted from the database at least information of interest to be transmitted to said electronic device based on the user presence information received previously. In other words, based on the profile of its appearances (for example, worker frequently offsite) will send the information most suitable. For example, suppose a user of the male gender than 35 years of age, frequently away; information of interest, in particular the advertising information transmitted may refer to advertising information of restaurants.

In one embodiment, the presence information include geo-location information obtained by the localization module (GPS) of the smartphone user. In this way the profiling of the presence information is more accurate, therefore the information of interest sent to the user may be even more specific, focused to a place where it spends most of the time. Still with reference to the example described above, the user of the male gender than 35 years of age emerges, the presence information including information geo-location, be frequently away in the city of Turin, in the Mirafiori district. The information of interest will report information advertising restaurants that particular area.

One proceeds following the step 107 in which the user confirms via their smartphone the information of interest received: in other words the user sends to the server confirmation of wanting to make use of the discount vouchers associated to information of interest.

So we proceed to step 108 where based on the outcome of step 107 the server transmits to the user's smartphone voucher associated information of interest previously transmitted. Alternatively, the voucher can be downloaded from the smartphone, which retrieves it from the server that makes it available. If successful, that is when the user sends confirmation want to receive the voucher associated to the information transmitted, the server will send. In case of failure, that is when the user does not wish to receive the voucher, the server does not send. In one embodiment, the server can store the event identifying the fact that the voucher associated to the information of interest has not been received. According to a further embodiment, the census of a user plans to acquire address information of the user, as previously described; and acquire information indicative of activities of interest to the user. Such information may include hobbies, entertaining activities, cultural interests, etc. it's assumed a possible census of a user according to the present invention: "Mario Rossi; 40 years; employee of second level; working in the headquarter; married" "lnterests: Cinema; reading; Riding". These information, as described in detail below, permit to select the best among the information of interest stored in the database that mostly fit to profile a census of "Mario Rossi".

In one embodiment, according to the method according to the present invention it is expected to combine the demographic information acquired earlier, the information of the previously acquired activities of interest and the geo-location information to select said at least one information of interest from the database by send to the machine electronic user.

In other words, the demographic information, the presence information and the activity information of interest are exploited to generate a query extraction from the database that provides to the user a information of interest that fits as much as possible to him. From the operation of census demographic information and demographic information are derived about the activities of interest. Presence information are obtained by the process of stamping telematics that the worker performs. It is assumed in the following example: employee Bruno Verdi, 40 years old, employed. Activities of interest: cinema. The server indicates these information as demographic information and activity information of interest. From the presence information that emerges from Monday to Wednesday, the employee works at the headquarters in Turin, while on Thursday and Friday he works in the Milan office. According to this information the query to extract the information of interest will be controlled accordingly, and such information will not suggest advertising on cinemas in the city of Turin on Thursday and Friday, and will propose information on cinemas in the city of Milan in those days advertising. The voucher associated with the information of interest, for example, provides a discount of 10% on the entrance ticket.

In one embodiment, the voucher includes a code for obtaining and / or qualifying for a good and / or service.

In one embodiment, the code may be a two-dimensional code such as QR code, to be displayed during the purchase of the good / service to the operator to obtain the discount or offer.

In an alternative embodiment, the code is a code to be stored on the smartphone and to be transmitted by means of proximity communication smartphone itself (for example via Bluetooth antenna or antenna NFC of the smartphone) to a device of the seller or service provider, to check and control the discount associated with the product related to the information of interest.

In an embodiment, the information of interest are transmitted to the user's smartphone contextually to the transmission of information presence effected through the smartphone. In other words, using the dedicated software to perform a telematics clocking in/out. In one embodiment, such software uses a portion of the screen to represent information of interest proposed. For example, in the example above, a portion of the screen includes the representative image of the logo of the "Cinema Paradiso, all award-winning films at the Oscars - Turin" on Monday, Tuesday and Wednesday; and "Essay Cinema Marchionatti - Milan" on Thursdays and Fridays. So when the user runs the software finds a section dedicated to the allowable operations (for example, insert clocking in/out, modify a clocking in/out, etc.) and a section dedicated to display the information of interest that the server retrieves from the database and transmits to the smartphone of the user himself. Depending on the outcome of the information of interest, the voucher is sent, for example, with reference the above example, a discount on the entry ticket of cinemas of Turin Milan.

In one embodiment, users can communicate each other by means of a messaging service present in the "app". This messaging service allows users to share their opinions about promotions and vouchers, Through this service, users can also communicate with each other as in a "social network".

Said method may comprise therefore the further step of sending a message from a first electronic device of a first user to one or more electronic devices of the respective one or more additional users.

The present invention also relates to a user equipment comprising:
- first memory means configured to store at least a program adapted to manage presence information of a user;
- a processor connected to said first memory means and adapted to execute said program;
- communication means configured to transmit/receive data to/from a telecommunication network;
wherein said program comprises code that when executed from said processor:
- transmits said presence information through said communication means;
- receives interest information;
- receives a voucher associated to said interest information;
- displays said interest information in a portion of screen of said equipment.

In one embodiment, the display of information of interest is contextual to the transmission of the presence information. In other words, when the user starts the app to perform telematics clocking in/out, it displays information of interest and simultaneously the associated vouchers. In this sense, it is important that the algorithm loaded on the server performs some telematics clocking in/out of training to be able to extract the information of interest to the user in the most suitable way. The present invention also relates to a management server comprising:
- communication means adapted to communicate through a public communication network, in particular Internet;
- first memory means configured to store for each user presence information received according to claim 6 and a management program;
- second memory means configured to store a plurality of interest information;
- third memory means configured to store a plurality of voucher related to said interest information;
- a processor connected to said communication means and said first, second and third memory means and adapted to execute said program;
wherein said program comprises code that when executed from said processor
- collects a plurality of interest information;
- makes a users census;
- associates at least one interest information to a user;
- associates at least a voucher to a corresponding interest information.

The present invention also relates to a database comprising a link interface, a processor and memory means, said link interface configured to communicate with a server as previously described above, said memory means configured to receive a plurality of interest information and a corresponding plurality of vouchers to store in said memory means, said processor configured to retrieve an interest information on the basis of a request received by a server as previously described. In one embodiment the database is a Database Management System associated with a server as described above, and then receives the query, retrieves the data or the data as function of the query and output them.

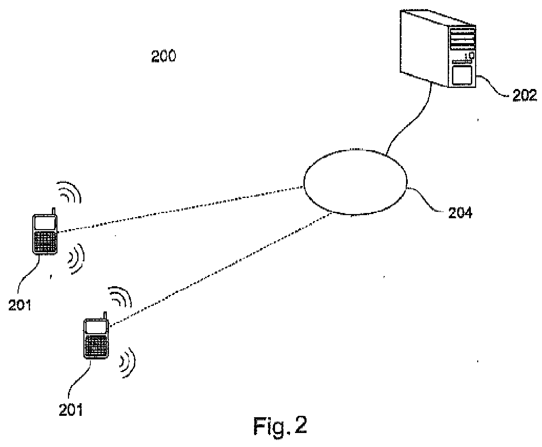

As shown in Figure 2, the present invention also relates to a system for the management and transmission of information comprising:
- a plurality of user equipments 201 as previously described associated to a corresponding plurality of users;
- a management server 202 as described above,
- at least one database 202 as described above,
in which the mentioned equipments communicate through the network 204 and implement the steps of the method described above.

## Claims

1. Method for managing and transmitting information wherein is provided a user equipped with a user equipment, a management server provided to an employer, a an information database provided to said employer, the method comprising the steps of:
A - collecting a plurality of interest information, in particular advertising information;
B - by said server generating one or more voucher related to said interest information;
C - by said server associating one or more voucher to said interest information;
D - by said server, taking a census of said user;
E - through said user equipment, transmitting presence information of said user in a workplace to said server;
F - by said server, extracting from said database at least one interest information to transmit to said user equipment on the basis of presence information received at the step E;
G - by said user equipment, confirming the at least one interest information received at the step F;
H - by said server, on the basis of the step G transmitting to said user equipment the voucher associated to the interest information.

2. Method according to claim 1 wherein said voucher comprises a code to obtain and/or enjoy of a good and/or service.

3. Method according to any of the preceding claims wherein said presence information comprise geo-localization information of said user in said workplace.

4. Method according to any of the preceding claims wherein said step D comprises:
I - acquiring biographic information of said user;
L - acquiring information indicative of activities of interest for said user.

5. Method according to claim 3 and 4 wherein is provided combining: said biographic information acquired at the step I, said information indicative of activities of interest for said user acquired at the step L and said geo-localization information to select at least one information of interest from said database to send to said user equipment.

6. Method according to any of the preceding claims wherein said information of interest are transmitted to said user equipment contextually to the transmission of said presence information that said user equipment carries out.

7. Method according to any of the claims from 2 to 6 wherein said voucher code is stored in said user equipment as a QR code.

8. Method according to any of the claims from 2 to 6 wherein said voucher code is stored in said user equipment in a format adapted to be sent through proximity communication means of the user equipment.

9. Method according to any of the preceding claims, comprising the further step of: M - sending a message from a first user equipment of a first user to one or more user equipment of respective one or more further users.

10. User equipment comprising:
- first memory means configured to store at least a program adapted to manage presence information of a user;
- a processor connected to said first memory means and adapted to execute said program;
- communication means configured to transmit/receive data to/from a telecommunication network;
wherein said program comprises code that when executed from said processor:
- transmits said presence information through said communication means;
- receives interest information;
- receives a voucher associated to said interest information;
- displays said interest information in a portion of screen of said equipment.

11. Management server comprising:
- communication means adapted to communicate through a public communication network, in particular Internet;
- first memory means configured to store for each user presence information received according to claim 6 and a management program;
- second memory means configured to store a plurality of interest information;
- third memory means configured to store a plurality of voucher related to said interest information;
- a processor connected to said communication means and said first, second and third memory means and adapted to execute said program;
wherein said program comprises code that when executed from said processor
- collects a plurality of interest information;
- makes a users census;
- associates at least one interest information to a user;
- associates at least a voucher to a corresponding interest information.

12. Database comprising a link interface, a processor and memory means, said link interface configured to communicate with a server according to claim 11, said memory means configured to receive a plurality of interest information and a corresponding plurality of vouchers to store in said memory means, said processor configured to retrieve an interest information on the basis of a request received by a server according to claim 11.

13. System for the management and transmission of information comprising:
- a plurality of user equipments according to claim 10 associated to a corresponding plurality of users;
- a management server according to claim 11;
- at least a database according to claim 12;
adapted to implement the method according any of the claims from 1 to 9.

## Amended claims

### Amended claims in accordance with Rule 137(2) EPC.

1. Method for managing and transmitting information wherein Is provided a user equipped with a smartphone, a management server provided to an employer, and an information database provided to said employer, the method comprising the steps of:
A - collecting a plurality of interest information, in particular advertising information;
B - generating one or more voucher related to said interest information through said server;
C - associating one or more voucher to said interest information through said server;
D - taking a census of said user through said server:
I - acquiring personal data of said user;
L - acquiring information indicative of activities of interest for said user;
E - transmitting presence information of said user in a workplace to said server through said smartphone, wherein said presence information comprises geolocalization information of said user in said workplace;
F - through said server, extracting from said database at least one Interest information to transmit to said smartphone on the basis of personal data acquired at the step I, said information indicative of activities of interest for said user acquired at the step L and said geo-localization information, wherein the at least one interest information is transmitted to the smartphone contextually to the transmission of presence information of step E and is displayed in a portion of a screen of the smartphone;
G - confirming the at least one interest information received at the step F through said smartphone;
H - on the basis of the step G transmitting to said smartphone the voucher associated to the interest Information through said server.

2. Method according to claim 1, wherein said voucher comprises a code to obtain and/or enjoy of a good and/or service.

3. Method according to claim 2, wherein said voucher code is stored in said smartphone as a QR code.

4. Method according to claim 2, wherein said voucher code is stored in said smartphone in a format adapted to be sent through proximity communication means of the smartphone.

5. Method according to any of the preceding claims, comprising the further step of:
M - sending a message from a first smartphone of a first user to one or more u smartphone of respective one or more further users.

6. User equipment comprising:
- first memory means configured to store at least a program adapted to manage presence information of a user;
- a processor connected to said first memory means and adapted to execute said program;
- communication means configured to transmit/receive data to/from a telecommunication network; wherein said program comprises code that when executed from said processor:
- transmits said presence information through said communication means;
- receives interest information contextually to the transmission of presence information;
- receives a voucher associated to said Interest information;
- displays said interest information In a portion of screen of said equipment.

7. User equipment according to claim 6, wherein said interest Information and the associated voucher are displayed when said presence Information is transmitted; the presence information being the clocking in/out.

8. Management server comprising:
- communication means adapted to communicate through a public communication network, in particular internet;
- first memory means configured to store for each user presence information received according to claim 1 and a management program;
- second memory means configured to store a plurality of interest information;
- third memory means configured to store a plurality of voucher related to said interest information;
- a processor connected to said communication means and said first, second and third memory means and adapted to execute said program;
wherein said program comprises code that when executed from said processor
- collects a plurality of interest information;
- makes a users census;
- associates at least one interest information to a user on the basis of personal data of the user, information indicative of activities of interest for said user, and geolocalization information of said user in a workplace;
- associates at least a voucher to a corresponding interest information.

9. Database comprising a link interface, a processor and memory means, said link interface configured to communicate with a server according to claim 8, said memory means configured to receive a plurality of interest information and a corresponding plurality of vouchers to store in said memory means, said processor configured to retrieve an interest information on the basis of a request received by a server according to claim 8.

10. System for the management and transmission of information comprising:
- a plurality of user equipments according to claim 6 or 7 associated to a corresponding plurality of users;
- a management server according to claim 8;
- at least a database according to claim 9;
adapted to implement the method according any of the claims from 1 to 6.
